# EUROPEAN PATENT APPLICATION

(11) **EP 4 529 117 A1**
(43) Date of publication of application: **26.03.2025**
(21) Application number: 23823246.6
(22) Date of filing: 16.06.2023
(51) Int. Cl.: H04L 41/0803

(54) **EDGE NODE CONTROL METHOD BASED ON CLOUD COMPUTING TECHNOLOGY, AND CLOUD MANAGEMENT PLATFORM**

(30) Priority: 16.06.2022 CN 202210688551; 29.09.2022 CN 202211202945
(71) Applicant: Huawei Cloud Computing Technologies Co., Ltd., Guiyang, Guizhou 550025 (CN)
(72) Inventor: GUO, Bin, Guiyang, Guizhou 550025 (CN)
(74) Representative: Thun, Clemens
(86) International application number: PCT/CN2023/100610
(87) International publication number: WO 2023/241680

(57) **Abstract**

This application discloses an edge node control method based on a cloud computing technology and a cloud management platform, to meet various service requirements of a tenant. The method in this application includes: The cloud management platform receives, through a configuration interface, configuration information of a first application and configuration information of a second application that are input by the tenant; the cloud management platform configures a deployment list, and sends the deployment list to a first edge node disposed in an edge device group, where the deployment list indicates the first edge node to configure and run the first application based on the configuration information of the first application, and record the configuration information of the second application; and the cloud management platform sends a first notification to the first edge node when detecting that the second edge node is added to the edge device group, where the first notification indicates the first edge node to send the configuration information of the second application to the second edge node, and the configuration information of the second application indicates the second edge node to configure and run the second application.

## Description

This application claims priorities to Chinese Patent Application No. 202210688551.6, filed with the China National Intellectual Property Administration on June 16, 2022 and entitled "CLOUD SERVICE SYSTEM BASED ON EDGE COMPUTING", and to Chinese Patent Application No. 202211202945.2, filed with the China National Intellectual Property Administration on September 29, 2022 and entitled "EDGE NODE CONTROL METHOD BASED ON CLOUD COMPUTING TECHNOLOGY AND CLOUD MANAGEMENT PLATFORM", both of which are incorporated herein by reference in their entireties.

### TECHNICAL FIELD

Embodiments of this application relate to the field of cloud technologies, and in particular, to an edge node control method based on a cloud computing technology and a cloud management platform.

### BACKGROUND

As deployment of a cloud service system gradually extends to edges, developers of the cloud service system may deploy miniaturized edge nodes in a data center of tenants or an equipment room of partners, to provide cloud services for the tenants by using resources of the edge nodes. Because the edge nodes are usually geographically close to the tenant side, a low latency requirement of the tenants for data processing can be supported.

A system provided in related technologies usually includes an on-premises edge node and a cloud management platform in a cloud. When a service needs to be completed, tenants may deploy, on the edge node via the cloud management platform, a plurality of applications that can complete the service. In this case, the edge node may process, by using (running) the plurality of applications, data to be processed by the tenants, to obtain a data processing result, and return the data processing result to the tenants for use.

However, for deployment convenience and miniaturization, hardware resources of the edge node are usually fixed, difficult to implement elastic capacity expansion. When a service to be implemented by a tenant is very complex, due to limited storage resources of the edge node, a large quantity of applications usually cannot be deployed on the edge node. Therefore, it is difficult to meet complex and diversified service requirements of the tenant.

### SUMMARY

Embodiments of this application provide an edge node control method based on a cloud computing technology and a cloud management platform. Regardless of how complex a service specified by a tenant is, the service can be jointly completed by a plurality of edge nodes, to meet various service requirements of the tenant.

A first aspect of embodiments of this application provides an edge node control method based on a cloud computing technology. The method is applied to a cloud management platform, the cloud management platform manages an infrastructure that provides a cloud service (in other words, the cloud management platform and the infrastructure that provides the cloud service are disposed on a cloud), the cloud management platform is connected to an on-premises first edge node and an on-premises second edge node, and the method includes:

When a tenant needs to process a service, the tenant may first determine a first application and a second application that are used to complete the service. Then, the tenant may input, via a client, configuration information of the first application and configuration information of the second application to a configuration interface provided by the cloud management platform. Therefore, the cloud management platform may successfully receive the configuration information of the first application and the configuration information of the second application through the configuration interface.

After receiving the configuration information of the first application and the configuration information of the second application, the cloud management platform may generate a deployment list including information such as the configuration information of the first application and the configuration information of the second application, and the cloud management platform may send the deployment list to one of a plurality of edge nodes in an edge device group, that is, the first edge node.

After receiving the deployment list, the first edge node may parse the deployment list to obtain the configuration information of the first application and the configuration information of the second application that are included in the deployment list, and may determine, based on the information, that the first application and the second application need to be configured, in other words, the first application and the second application need to be installed. After determining that the first application and the second application need to be configured, the first edge node may first configure and start the first application based on the configuration information of the first application, and cache the configuration information of the second application.

The cloud management platform sends a first notification to the first edge node when detecting that the second edge node is added to the edge device group. The first edge node determines, based on the first notification, that the second application may be configured on the second edge node. Therefore, the first edge node may send a new deployment list to the second edge node, where the new deployment list may include the configuration information of the second application. After receiving the new deployment list, the second edge node may parse the new deployment list to obtain the configuration information of the second application included in the new deployment list. Therefore, the second edge node may configure and start the second application based on the configuration information of the second application.

It can be learned from the foregoing method that after the configuration information of the first application and the configuration information of the second application that are input by the tenant are received through the configuration interface, the cloud management platform may send the deployment list that includes the configuration information of the first application and the configuration information of the second application to the first edge node. After receiving the deployment list, the first edge node may configure and run the first application based on the configuration information of the first application, and record the configuration information of the second application. The cloud management platform may send the first notification to the first edge node when detecting that the second edge node is added to the edge device group, so that the first edge node sends the configuration information of the second application to the second edge node based on the first notification, and the second edge node configures and runs the second application based on the configuration information of the second application. In the foregoing process, the first application and the second application may be used to complete a service specified by the tenant. The first edge node may configure the first application on the first edge node, and configure the second application on the second edge node based on an indication of the cloud management platform. This is equivalent to a case in which the first edge node divides the service into two parts with assistance of the cloud management platform. The first edge node is responsible for a part of the service, and the second edge node is responsible for the other part of the service. In this case, the first edge node may run the first application and the second application in cooperation with the second edge node to complete the service specified by the tenant. It can be learned that, regardless of how complex the service is, the service can be jointly completed by the first edge node and the second edge node, to meet various service requirements of the tenant.

In a possible implementation, the method further includes: The cloud management platform provides a control interface, where the control interface is configured to receive a control command that is input by the tenant and that is for the first application; and the cloud management platform sends the control command to the first edge node, where the control command is executed in the first application of the first edge node. In the foregoing implementation, after the first application and the second application are installed and started, the cloud management platform may provide the control interface for the client of the tenant. In this case, the tenant may input the control command for the first application to the control interface via the client. Therefore, the cloud management platform may receive the control command through the control interface. Based on the control command, the cloud management platform may determine that the tenant needs to use the first application to complete the service, and forward the control command to the first edge node in which the first application is configured, to complete the service specified by the tenant.

In a possible implementation, the first application indicates the first edge node to collect data, and the second application indicates the second edge node to process the data collected by the first edge node. In the foregoing implementation, after receiving the control command, the first edge node may execute the control command, in other words, run the first application to collect data, and send the data collected by the first edge node to the second edge node, so that the second edge node runs the second application to process the data collected by the first edge node, to obtain a data processing result.

In a possible implementation, the method further includes: The cloud management platform obtains, from the second edge node, a data processing result generated by processing the data by the second edge node; and the cloud management platform provides the data processing result for the tenant. In the foregoing implementation, after the second edge node obtains the data processing result, the second edge node may further return the data processing result to the cloud management platform. Therefore, the cloud management platform may provide the data processing result for the tenant to view and use. In this way, the first edge node and the second edge node jointly complete processing of the collected data, in other words, the first edge node and the second edge node jointly complete the service specified by the tenant.

A second aspect of embodiments of this application provides a cloud management platform. The cloud management platform manages an infrastructure that provides a cloud service, the cloud management platform is connected to an on-premises first edge node and an on-premises second edge node, and the cloud management platform includes: a first provision module, configured to provide a configuration interface, where the configuration interface is configured to receive configuration information of a first application and configuration information of a second application that are input by a tenant; a configuration module, adapted to configure a deployment list, and send the deployment list to the first edge node, where the first edge node is disposed in an edge device group, and the deployment list indicates the first edge node to configure and run the first application based on the configuration information of the first application, and record the configuration information of the second application; and a notification module, configured to send a first notification to the first edge node when it is detected that the second edge node is added to the edge device group, where the first notification indicates the first edge node to send the configuration information of the second application to the second edge node, and the configuration information of the second application indicates the second edge node to configure and run the second application.

It can be learned from the foregoing cloud management platform that after the configuration information of the first application and the configuration information of the second application that are input by the tenant are received through the configuration interface, the cloud management platform may send the deployment list that includes the configuration information of the first application and the configuration information of the second application to the first edge node. After receiving the deployment list, the first edge node may configure and run the first application based on the configuration information of the first application, and record the configuration information of the second application. The cloud management platform may send the first notification to the first edge node when detecting that the second edge node is added to the edge device group, so that the first edge node sends the configuration information of the second application to the second edge node based on the first notification, and the second edge node configures and runs the second application based on the configuration information of the second application. In the foregoing process, the first application and the second application may be used to complete a service specified by the tenant. The first edge node may configure the first application on the first edge node, and configure the second application on the second edge node based on an indication of the cloud management platform. This is equivalent to a case in which the first edge node divides the service into two parts with assistance of the cloud management platform. The first edge node is responsible for a part of the service, and the second edge node is responsible for the other part of the service. In this case, the first edge node may run the first application and the second application in cooperation with the second edge node to complete the service specified by the tenant. It can be learned that, regardless of how complex the service is, the service can be jointly completed by the first edge node and the second edge node, to meet various service requirements of the tenant.

In a possible implementation, the cloud management platform further includes a second provision module, configured to provide a control interface, where the control interface is configured to receive a control command that is input by the tenant and that is for the first application; and a sending module, configured to send the control command to the first edge node, where the control command is executed in the first application of the first edge node.

In a possible implementation, the first application indicates the first edge node to collect data, and the second application indicates the second edge node to process the data collected by the first edge node.

In a possible implementation, the cloud management platform further includes an obtaining module, configured to obtain, from the second edge node, a data processing result generated by processing the data by the second edge node; and a third provision module, configured to provide the data processing result for the tenant.

A third aspect of embodiments of this application provides an edge node control system. The system includes a cloud management platform, an infrastructure, a first edge node, and a second edge node, the cloud management platform manages the infrastructure that provides a cloud service, and the cloud management platform is connected to the on-premises first edge node and the on-premises second edge node. The cloud management platform is configured to provide a configuration interface, where the configuration interface is configured to receive configuration information of a first application and configuration information of a second application that are input by a tenant; the cloud management platform is further adapted to configure a deployment list, and send the deployment list to the first edge node, where the first edge node is disposed in an edge device group; the first edge node is adapted to configure and run the first application based on the configuration information of the first application included in the deployment list, and record the configuration information of the second application included in the deployment list; and the cloud management platform is further configured to send a first notification to the first edge node when detecting that the second edge node is added to the edge device group.

The first edge node is further configured to send the configuration information of the second application to the second edge node based on the first notification; and the second edge node is adapted to configure and run the second application based on the configuration information of the second application.

It can be learned from the foregoing system that after the configuration information of the first application and the configuration information of the second application that are input by the tenant are received through the configuration interface, the cloud management platform may send the deployment list that includes the configuration information of the first application and the configuration information of the second application to the first edge node. After receiving the deployment list, the first edge node may configure and run the first application based on the configuration information of the first application, and record the configuration information of the second application. The cloud management platform may send the first notification to the first edge node when detecting that the second edge node is added to the edge device group, so that the first edge node sends the configuration information of the second application to the second edge node based on the first notification, and the second edge node configures and runs the second application based on the configuration information of the second application. In the foregoing process, the first application and the second application may be used to complete a service specified by the tenant. The first edge node may configure the first application on the first edge node, and configure the second application on the second edge node based on an indication of the cloud management platform. This is equivalent to a case in which the first edge node divides the service into two parts with assistance of the cloud management platform. The first edge node is responsible for a part of the service, and the second edge node is responsible for the other part of the service. In this case, the first edge node may run the first application and the second application in cooperation with the second edge node to complete the service specified by the tenant. It can be learned that, regardless of how complex the service is, the service can be jointly completed by the first edge node and the second edge node, to meet various service requirements of the tenant.

In a possible implementation, the cloud management platform is further configured to provide a control interface, where the control interface is configured to receive a control command that is input by the tenant and that is for the first application; and send the control command to the first edge node, where the control command is executed in the first application of the first edge node.

In a possible implementation, the first application indicates the first edge node to collect data, and the second application indicates the second edge node to process the data collected by the first edge node.

In a possible implementation, the cloud management platform is further configured to obtain, from the second edge node, a data processing result generated by processing the data by the second edge node; and provide the data processing result for the tenant.

A fourth aspect of embodiments of this application provides a cloud management platform. The cloud management platform includes a memory and a processor, the memory stores code, and the processor is configured to execute the code. When the code is executed, the cloud management platform performs the method in any one of the first aspect or the possible implementations of the first aspect.

A fifth aspect of embodiment of this application provides a computer storage medium. The computer storage medium stores a computer program, and when the program is executed by a computer, the computer is enabled to perform the method in any one of the first aspect or the possible implementations of the first aspect.

A sixth aspect of embodiments of this application provides a computer program product. The computer program product stores instructions. When the instructions are executed by a computer, the computer is enabled to perform the method in the first aspect or any one of the possible implementations of the first aspect.

In embodiments of this application, after the configuration information of the first application and the configuration information of the second application that are input by the tenant are received through the configuration interface, the cloud management platform may send, to the first edge node, the deployment list including the configuration information of the first application and the configuration information of the second application. After receiving the deployment list, the first edge node may configure and run the first application based on the configuration information of the first application, and record the configuration information of the second application. The cloud management platform may send the first notification to the first edge node when detecting that the second edge node is added to the edge device group, so that the first edge node sends the configuration information of the second application to the second edge node based on the first notification, and the second edge node configures and runs the second application based on the configuration information of the second application. In the foregoing process, the first application and the second application may be used to complete a service specified by the tenant. The first edge node may configure the first application on the first edge node, and configure the second application on the second edge node based on an indication of the cloud management platform. This is equivalent to a case in which the first edge node divides the service into two parts with the assistance of the cloud management platform, where the first edge node is responsible for one part of the service, and the second edge node is responsible for the other part of the service. In this case, the first edge node may run the first application and the second application in cooperation with the second edge node to complete the service specified by the tenant. It can be learned that, regardless of how complex the service is, the service can be jointly completed by the first edge node and the second edge node, to meet various service requirements of the tenant.

### BRIEF DESCRIPTION OF DRAWINGS

FIG. 1 is a diagram of a structure of an edge node control system according to an embodiment of this application;
FIG. 2A and FIG. 2B are a schematic flowchart of an edge node control method based on a cloud computing technology according to an embodiment of this application;
FIG. 3 is a diagram of another structure of an edge node control system according to an embodiment of this application;
FIG. 4 is a diagram of another structure of an edge node control system according to an embodiment of this application;
FIG. 5 is a diagram of another structure of an edge node control system according to an embodiment of this application;
FIG. 6 is a diagram of a structure of a cloud management platform according to an embodiment of this application; and
FIG. 7 is a diagram of another structure of a cloud management platform according to an embodiment of this application.

### DESCRIPTION OF EMBODIMENTS

Embodiments of this application provide an edge node control method based on a cloud computing technology and a cloud management platform. Regardless of how complex a service specified by a tenant is, the service can be jointly completed by a plurality of edge nodes, to meet various service requirements of the tenant.

In the specification, the claims, and the accompanying drawings of this application, the terms "first", "second", and the like are intended to distinguish between similar objects but do not necessarily indicate a specific order or sequence. It should be understood that the terms used in such a way are interchangeable in appropriate circumstances. This is merely a distinguishing manner used when objects having a same attribute are described in embodiments of this application. In addition, the terms "include", "contain" and any other variants thereof mean to cover a non-exclusive inclusion, so that a process, a method, a system, a product, or a device that includes a series of units is not necessarily limited to those units, but may include other units not expressly listed or inherent to such a process, method, product, or device.

As deployment of a cloud service system gradually extends to edges, developers of the cloud service system may deploy miniaturized edge nodes in a data center of tenants or an equipment room of partners, to provide cloud services for the tenants by using resources of the edge nodes. Because the edge nodes are usually geographically close to the tenant side, a low latency requirement of the tenants for data processing can be supported.

A system provided in related technologies usually includes an on-premises edge node and a cloud management platform in a cloud. When a service needs to be completed, tenants may deploy, on the edge node via the cloud management platform, a plurality of applications that can complete the service. In this case, the edge node may process, by using (running) the plurality of applications, data to be processed by the tenants, to obtain a data processing result, and return the data processing result to the tenants for use. For example, it is assumed that the edge node is an industrial computer in a workshop. To meet a service requirement of the edge node, the tenant may deploy a series of applications on the industrial computer via the cloud management platform, including a data collection application, a data analysis application, a data modeling application, and the like. In this case, the tenant may start and run these applications on the industrial computer via the cloud management platform, so that the industrial computer collects to-be-processed data by using the data collection application, analyzes the to-be-processed data by using the data analysis application, to obtain a corresponding analysis result, and then establishes a corresponding model by using the data modeling application based on the analysis result, to output the model for the tenant to use.

However, for deployment convenience and miniaturization, hardware resources of the edge node are usually fixed, difficult to implement elastic capacity expansion. When a service to be implemented by a tenant is very complex, due to limited storage resources of the edge node, a large quantity of applications usually cannot be deployed on the edge node. Therefore, it is difficult to meet complex and diversified data processing requirements of the tenant. The foregoing example is still used. If the service requirement of the tenant is more complex, a report production application and a data detection application further need to be installed on the industrial computer. However, because the data collection application, the data analysis application, the data modeling application, and the like already occupy most storage resources of the industrial computer, the report production application and the data detection application cannot be installed on the industrial computer. In this case, the industrial computer cannot implement complex and diversified service requirements of the tenant.

Further, in a system provided in related technologies, different edge nodes may implement different service requirements, in other words, services that different edge nodes are responsible for are usually different, and the services that different edge nodes are responsible for are manually specified by the tenant. After a specific service is specified for an edge node, if the edge node cannot bear the service that the edge node is to be responsible for (for example, the edge node finds that resources required for running an application of the edge node are too large to cause the edge node to be overloaded), the tenant needs to perform a manual operation to adjust the service that the edge node is to be responsible for. This is labor-consuming.

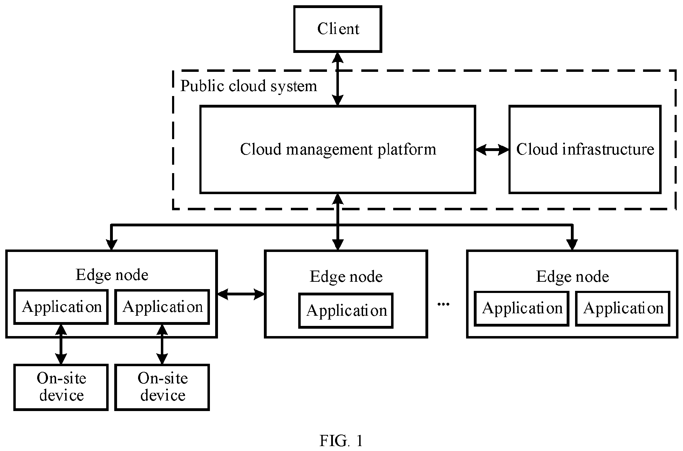

To resolve the foregoing problem, an embodiment of this application provides an edge node control method based on a cloud computing technology. The method may be implemented by using an edge node control system. FIG. 1 is a diagram of a structure of an edge node control system according to an embodiment of this application. As shown in FIG. 1, the edge node control system includes a plurality of on-premises edge nodes, a cloud management platform disposed in a cloud, and a cloud infrastructure. In other words, the cloud management platform and the cloud infrastructure that are far away from a tenant side may form a public cloud system that provides a cloud service for a tenant, and the plurality of edge nodes close to the tenant side may provide an on-site service for the tenant. The following briefly describes the cloud management platform, the cloud infrastructure, and the edge nodes.

The cloud management platform may perform overall management on the cloud infrastructure and the plurality of edge nodes in the system, and may be open to tenants, and respond to their requests. For example, the cloud management platform may provide various interfaces such as a login interface, a configuration interface, and a control interface, for access of a client (for example, a terminal device used by the tenant or a browser on the terminal device used by the tenant) of the tenant. The cloud management platform may perform identity authentication on the client of the tenant through the login interface (for example, account and password input fields on a login page), and the client of the tenant may be allowed to log in to the cloud management platform after the authentication succeeds. The cloud management platform may further allow, through the configuration interface (for example, a deployment list input field on a tenant page), the client of the tenant to upload configuration information of an application (which may indicate an application to be installed and used by the tenant and a configuration) to the cloud management platform. Therefore, the cloud management platform may deliver a deployment list including the configuration information of the application to the edge node, so that the edge node configures (installs) and runs the corresponding application based on the deployment list. The cloud management platform may further allow, through the control interface (for example, a communication interface or a data processing request input field on the tenant page), the client of the tenant to send a control command (where the control command may indicate a data processing requirement of the tenant) to the cloud management platform. Therefore, the cloud management platform may deliver the control command to the edge node, so that the edge node executes the control command by using an application, to collect and process corresponding data.

The cloud infrastructure is a hardware device used by the public cloud system to provide various cloud services. The cloud infrastructure may include a plurality of data centers (data centers, DCs) deployed in different geographical areas. Each data center includes a plurality of physical servers, and each server may be configured to support various cloud services, such as a virtual machine (virtual machine, VM), a docker (docker), a bare metal server, and an elastic volume service. In addition, the cloud management platform is in a communication connection with a cloud infrastructure device. Therefore, the cloud management platform can provide various cloud services supported by the cloud infrastructure for the tenant to use.

The edge node can be connected to various on-site devices of the tenant downward and connected to the cloud management platform upward. The edge node is typically presented as a hardware entity and may be considered as a data processing unit with computing resources, storage resources, and network resources. Due to different service focuses, the edge node usually has a plurality of product forms. (1) The edge node may be an edge gateway responsible for processing and converting a network protocol. (2) The edge node may alternatively be an edge server responsible for a closed-loop control service. (3) The edge node may alternatively be an edge cloud responsible for large-scale data processing, where the edge cloud may be a physical server close to a site (the tenant side), or may be a virtual machine (virtual machine, VM) and a docker (docker) on the physical server close to the site, or the like. (4) The edge node may alternatively be an edge device responsible for medium-scale and small-scale data processing, for example, an industrial computer close to a site. In these cases, the on-site device that accesses the edge node may be a personal computer, a notebook computer, a smartphone, a smartwatch, a smart band sensor, an electric meter, a water meter, a gas meter, a controller (for example, a programmable logic controller (programmable logic controller, PLC)), an upper computer, a control system, a database, and the like that are used by the tenant on site. It should be noted that the edge node may receive the deployment list delivered by the cloud management platform, to configure and run a corresponding application. In this case, the edge node has a function specified by the tenant, that is, the edge node can complete a service specified by the tenant. In this case, after receiving the control command delivered by the cloud management platform, the edge node may run a deployed application to obtain data (where the data may be collected using the on-site device) and process the data, to obtain a data processing result. In this way, the edge node can meet a service requirement of the tenant.

It should be noted that, in the plurality of edge nodes in the edge node control system, because resource specifications of different edge nodes are different, when delivering a deployment list including configuration information of a plurality of applications to an edge node, the cloud management platform does not consider whether the edge node has a capability of deploying the plurality of applications indicated by the deployment list. In this case, after receiving the deployment list, the edge node may configure only several applications in the plurality of applications based on a resource status of the edge node, and configure other applications on other edge nodes. Therefore, after receiving the control command from the cloud management platform, the edge node may cooperate with the other edge nodes to run the plurality of applications to process data (in other words, the edge node may first run several applications in the plurality of applications to collect data, and then enable the other edge nodes to run other applications in the plurality of applications to process the data). It can be learned that the edge node may divide a service specified by the tenant into two parts in advance, and the edge node is responsible for a part of the service, and the other edge nodes are responsible for the other part of the service, to jointly complete the service specified by the tenant, to meet the service requirement of the tenant.

Further, when running the several applications configured by the edge node, the edge node finds that the edge node is overloaded, may reserve a part of the several applications, and migrate the other part of the several applications to the other edge nodes based on an indication of the cloud management platform, to cooperate with the other edge nodes to run the several applications to process data. It can be learned that, when the edge node executes the part of the service that the edge node is responsible for, if the edge node finds that the edge node cannot bear the part of the service, the edge node may divide the part of the service in real time, to cooperate with the other edge nodes to jointly complete the part of the service.

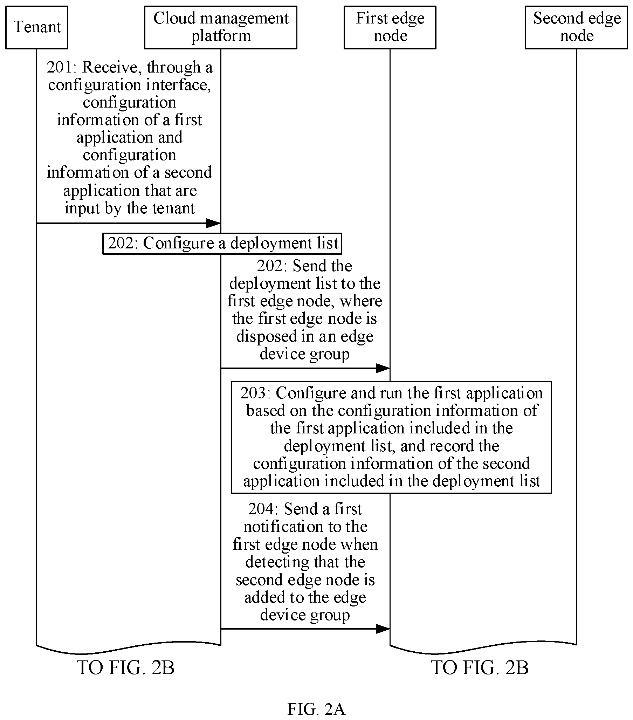

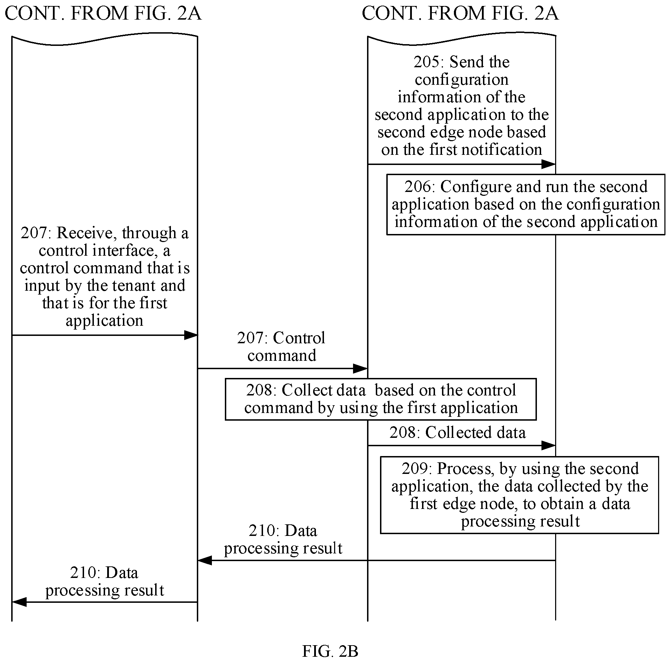

To further understand a working procedure of the foregoing edge node control system, the following further describes the working procedure with reference to FIG. 2A and FIG. 2B. FIG. 2A and FIG. 2B are a schematic flowchart of an edge node control method based on a cloud computing technology according to an embodiment of this application. The method may be applied to the edge node control system shown in FIG. 1. As shown in FIG. 2A and FIG. 2B, the method includes the following steps.

201: The cloud management platform receives, through a configuration interface, configuration information of a first application and configuration information of a second application that are input by a tenant.

In this embodiment, when the tenant needs to process a service, the tenant may first determine the first application and the second application that are used to complete the service. Then, the tenant may input, via a client, the configuration information of the first application and the configuration information of the second application to the configuration interface (for example, a deployment list input field on a tenant page) provided by the cloud management platform. Therefore, the cloud management platform may successfully receive the configuration information of the first application and the configuration information of the second application through the configuration interface. The configuration information of the first application may include information such as an installation package of the first application and a configuration required for running the first application, and the configuration information of the second application may include information such as an installation package of the second application and a configuration required for running the second application.

It should be noted that, in a plurality of applications determined by the tenant for completing the service, the first application may be at least one of the plurality of applications, and the second application may be an application other than the first application in the plurality of applications. For example, if the service of the tenant is to construct a model by using data, the tenant may select a data collection application, a data analysis application, and a data modeling application to complete the service. In this way, the foregoing first application may be the data collection application and the data analysis application, and the foregoing second application may be the data modeling application.

It should be further noted that, the tenant may determine, in a plurality of manners, the first application and the second application that are used to complete the service, and the following separately describes the plurality of manners. (1) The tenant may define the first application and the second application based on a service requirement of the tenant. (2) Alternatively, the tenant may select, based on a service requirement of the tenant, the first application, the second application, and the like from an application candidate pool provided by the cloud management platform.

It should be further noted that the configuration required for running the first application refers to a requirement that needs to be met when the first application is run, and the configuration required for running the second application refers to a requirement that needs to be met when the second application is run. For example, a configuration required for running the data collection application refers to a sampling frequency and sampling duration that need to be met when the data collection application is run to collect data. For another example, a configuration required for running the data modeling application refers to a format of input data and a type of an output model that need to be met when the data modeling application is run to perform data modeling.

202: The cloud management platform configures a deployment list, and sends the deployment list to a first edge node, where the first edge node is disposed in an edge device group.

After receiving the configuration information of the first application and the configuration information of the second application, the cloud management platform may generate the deployment list including information such as the configuration information of the first application and the configuration information of the second application, and the cloud management platform may send the deployment list to one of a plurality of edge nodes in the edge device group, that is, the first edge node.

203: The first edge node configures and runs the first application based on the configuration information of the first application included in the deployment list, and records the configuration information of the second application included in the deployment list.

204: The cloud management platform sends a first notification to the first edge node when detecting that a second edge node is added to the edge device group.

205: The first edge node sends the configuration information of the second application to the second edge node based on the first notification.

206: The second edge node configures and runs the second application based on the configuration information of the second application.

After receiving the deployment list, the first edge node may parse the deployment list to obtain the configuration information of the first application and the configuration information of the second application that are included in the deployment list, and may determine, based on the information, that the first application and the second application need to be configured, in other words, the first application and the second application need to be installed.

After determining that the first application and the second application need to be configured, the first edge node may first detect whether the second application needs to be configured on other edge nodes, and after determining that the second application needs to be configured on the other edge nodes, the first edge node may first configure and start the first application based on the configuration information of the first application (for example, install and start the first application based on the installation package of the first application), and cache the configuration information of the second application. Then, the first edge node may send a first request to the cloud management platform. After receiving the first request, the cloud management platform may determine that the first edge node needs to configure the second application on the other edge nodes. Then, the cloud management platform may select one of several edge nodes (other than the first edge node) that have available resources and that have been added to the edge device group as the second edge node. Then the cloud management platform may send the first notification to the first edge node, and the first edge node determines, based on the first notification, that the second application may be configured on the second edge node. Therefore, the first edge node may send a new deployment list to the second edge node, where the new deployment list may include the configuration information of the second application. After receiving the new deployment list, the second edge node may parse the new deployment list to obtain the configuration information of the second application included in the new deployment list. Therefore, the second edge node may configure and start the second application based on the configuration information of the second application (for example, install and start the second application based on the installation package of the second application).

It may be understood that, after the second edge node configures and starts the second application, the service specified by the tenant is divided into two parts, the first edge node is responsible for a part of the service, and the second edge node is responsible for the other part of the service.

Specifically, the first edge node may determine, in the following manner, whether the second application needs to be configured on the other edge nodes.

The first edge node may first detect whether a resource required for configuring the first application and the second application is larger than an available resource of the first edge node. If the resource required for configuring the first application and the second application is larger than the available resource of the first edge node, it indicates that the second application needs to be configured on the other edge nodes. It should be noted that, when the first edge node performs detection, the resource, required for configuring the first application and the second application, on which the first edge node depends is usually a storage resource required for configuring the first application and the second application. Correspondingly, the available resource of the first edge node is a storage resource available to the first edge node.

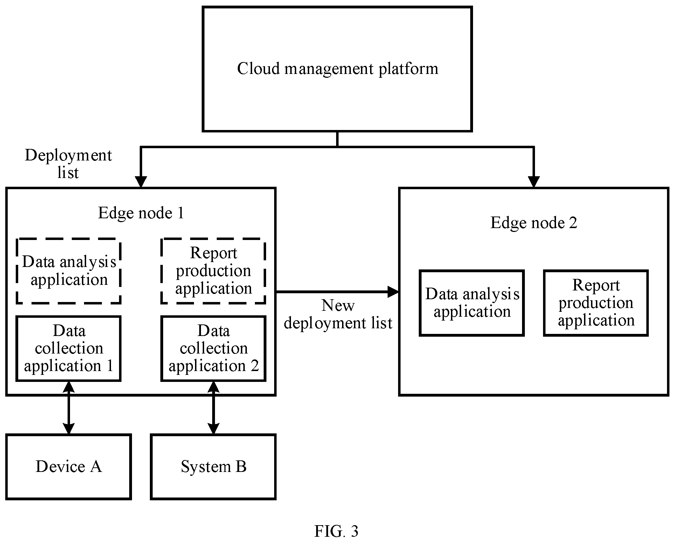

For example, as shown in FIG. 3 (FIG. 3 is a diagram of another structure of an edge node control system according to an embodiment of this application), it is assumed that a service of a tenant is to produce a report by using data. The cloud management platform may deliver, to an edge node 1, a deployment list that indicates a data collection application 1, a data collection application 2, a data analysis application, and a report production application. Only 1.5G available storage resources of the edge node 1 remain, while 1G resources are required for installing the data collection application 1 and the data collection application 2 and 3G resources are required for configuring the data analysis application and the report production application. Therefore, the four applications cannot be installed on the edge node 1. In this case, the edge node 1 may install only the data collection application 1 and the data collection application 2. After an edge node 2 with 5G available storage resources is selected on the cloud management platform and is notified to the edge node 1, the edge node 1 may send, to the edge node 2, a new deployment list that indicates the data analysis application and the report production application, so that the data analysis application and the report production application are installed on the edge node 2.

More specifically, the first edge node may determine, in the following manner, to preferentially configure the first application.

Because the deployment list may further include a priority of the first application and a priority of the second application, after the priority of the first application and the priority of the second application are obtained by parsing the deployment list, because priority sorting of the applications is preset on the first edge node, the first edge node may determine, based on the priority sorting, that the priority of the first application is greater (higher) than the priority of the second application. In this case, the first edge node may preferentially configure the first application, and configure the second application on the second edge node.

More specifically, the cloud management platform may select the second edge node in a plurality of manners.

(1) The cloud management platform may determine any one of several edge nodes (other than the first edge node) that are in the edge device group and that have available resources as the second edge node. (2) The cloud management platform may determine, from several edge nodes (other than the first edge node) that are in the edge device group and that have available resources, an edge node with a largest available resource as the second edge node.

207: The cloud management platform receives, through a control interface, a control command that is input by the tenant and that is for the first application, and sends the control command to the first edge node.

208: The first edge node collects data based on the control command by using the first application, and sends the collected data to the second edge node.

209: The second edge node processes, by using the second application, the data collected by the first edge node, to obtain a data processing result.

210: The second edge node sends the data processing result to the cloud management platform, so that the cloud management platform provides the data processing result for the tenant.

After the first application and the second application are installed and started, the cloud management platform may provide the control interface for the client of the tenant. In this case, the tenant may input the control command for the first application to the control interface (for example, a data processing request input field on the tenant page) via the client. Therefore, the cloud management platform may receive the control command through the control interface. Based on the control command, the cloud management platform may determine that the tenant needs to use the first application to complete the service, and forward the control command to the first edge node in which the first application is configured, to complete the service specified by the tenant.

After receiving the control command, the first edge node may execute the control command, in other words, run the first application to collect data, and send the data collected by the first edge node to the second edge node, so that the second edge node runs the second application to process the data collected by the first edge node, to obtain a data processing result (that is, processed data). After the second edge node obtains the data processing result, the second edge node may further return the data processing result to the cloud management platform. Therefore, the cloud management platform may use the data processing result as a feedback for the control command, and send the data processing result to the client of the tenant for the tenant to view and use. In this way, the first edge node and the second edge node jointly complete processing of the collected data, in other words, the first edge node and the second edge node jointly complete the service specified by the tenant.

It should be noted that the first edge node runs the first application based on the configuration required for running the first application. Similarly, the second edge node also runs the second application based on the configuration required for running the second application.

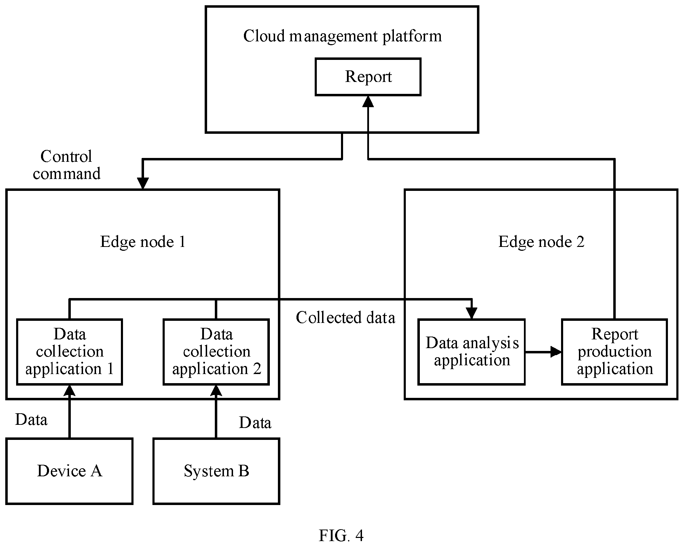

For example, as shown in FIG. 4 (FIG. 4, which is based on FIG. 3, is a diagram of another structure of an edge node control system according to an embodiment of this application), after the cloud management platform delivers a control command to an edge node 1, the edge node 1 may run a data collection application 1, to drive a device A connected to the edge node 1 to collect data, and run a data collection application 2, to drive a system B connected to the edge node 1 to collect data. After obtaining the data collected by the device A and the system B, the edge node 1 may send the collected data to an edge node 2. Therefore, the edge node 2 may run a data analysis application to analyze the data collected by the edge node 1, to obtain an analysis result, and then run a report production application to generate a report in a specific form based on the analysis result, and return the report to the cloud management platform, so that the cloud management platform provides the report for the tenant to view and use.

Specifically, the second edge node may obtain the data processing result in the following manner.
(1) After determining that the data collected by the first edge node needs to be processed, the second edge node may first detect whether a resource required for running the second application is smaller than a preset resource threshold (where a value of the threshold may be set based on an actual requirement, and is not limited herein), to determine whether the second edge node can bear running of the second application.
(2) If the resource required for running the second application is smaller than the preset resource threshold, it indicates that the second edge node can bear the running of the second application, and the second edge node directly runs the second application to process the collected data, to obtain the data processing result.
(3) If the resource required for running the second application is larger than or equal to the preset resource threshold, it indicates that the second edge node cannot bear the running of the second application. In this case, the second edge node sends a second request to the cloud management platform. After receiving the second request, the cloud management platform may select one of several edge nodes (other than the first edge node and the second edge node) that have available resources and that have been added to the edge device group as a third edge node. Then, the cloud management platform may send a second notification to the second edge node. After receiving the second notification, the second edge node determines that a part of the second application may be migrated to the third edge node for running. Then, the second edge node may send configuration information of the part of the second application to the third edge node, so that the third edge node configures the part of application based on the configuration information of the part of application. Then, the second edge node may run the other part of the second application to process the collected data, to obtain an intermediate processing result, and send the intermediate processing result to the third edge node, so that the third edge node may run the part of application to process the intermediate processing result, to obtain the data processing result, and send the data processing result to the cloud management platform. In this way, when the second edge node executes a part of the service that the second edge node is responsible for, because the second edge node cannot bear the part of the service that the second edge node is responsible for, the second edge node may divide the part of the service in real time, to cooperate with the third edge node to jointly complete the part of the service.

It should be noted that, when the second edge node performs detection, the resource, required for running the second application, on which the second edge node depends is usually a computing resource required for running the second application (where certainly, a storage resource and a network resource may also be added). Correspondingly, the preset resource threshold is a preset computing resource threshold (where certainly, a preset storage resource threshold and a preset network resource threshold may also be added).

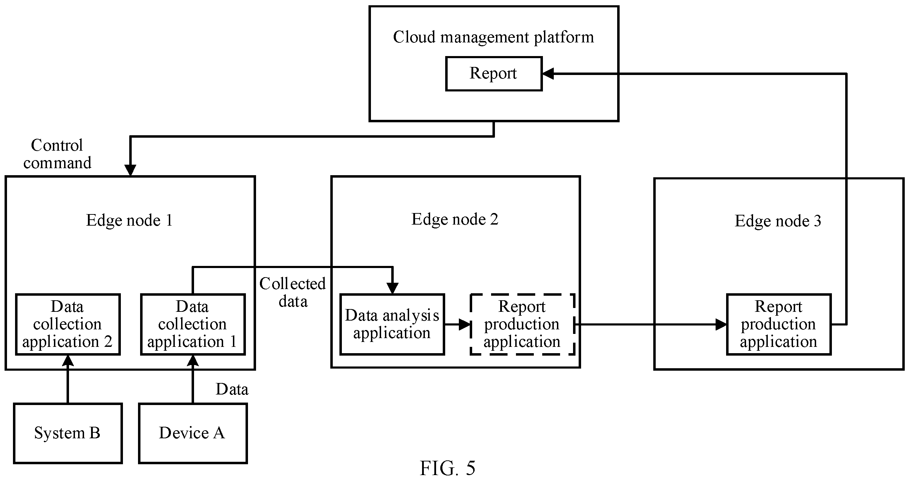

For example, as shown in FIG. 5 (FIG. 5, which is based on FIG. 4, is a diagram of another structure of an edge node control system according to an embodiment of this application), an edge node 2 determines that a CPU resource occupied for running a data analysis application and a report production application is greater than 80%, and after the cloud management platform selects an edge node 3 with a large quantity of remaining CPU resources and notifies the edge node 2, the edge node 2 migrates the report production application to the edge node 3 for installation. Then, the edge node 2 may run the data analysis application, to analyze data collected by an edge node 1, to obtain an analysis result, and send the analysis result to the edge node 3. After receiving the analysis result, the edge node 3 may run the report production application to generate a report in a specific form based on the analysis result, and send the report to the cloud management platform.

More specifically, the cloud management platform may select the third edge node in a plurality of manners.

(1) The cloud management platform may determine any one of several edge nodes (other than the first edge node and the second edge node) that are in the edge device group and that have available resources as the third edge node. (2) The cloud management platform may determine, from several edge nodes (other than the first edge node and the second edge node) that are in the edge device group and that have available resources, an edge node with a largest available resource as the third edge node.

It should be understood that, in this embodiment, if the resource required for configuring the second application is larger than an available resource of the second edge node, the second edge node may also divide the second application into two parts, reserve only a part of the second application, and deploy the other part of the second application on a fourth edge node (an edge node in several edge nodes that have available resources). For this process, refer to a related description part in which the first edge node configures the second application on the second edge node. Details are not described herein again. Further, the second edge node may run the second application in cooperation with the fourth edge node to process the collected data. For this process, refer to a related description part in which the first edge node runs the first application and the second application in cooperation with the second edge node to complete data collection and process the collected data. Details are not described herein again.

It should be further understood that, in this embodiment, if a resource required for running the first application is larger than the preset resource threshold, the first edge node may also divide the first application into two parts, migrate a part of the first application to a fifth edge node (an edge node in several edge nodes that have available resources), and reserve the other part of the first application. In this way, the first edge node may run the first application in cooperation with the fifth edge node to collect data. For this process, refer to a related description part in which the second edge node runs the second application in cooperation with the third edge node to process the collected data. Details are not described herein again.

In this embodiment of this application, after the configuration information of the first application and the configuration information of the second application that are input by the tenant are received through the configuration interface, the cloud management platform may send the deployment list that includes the configuration information of the first application and the configuration information of the second application to the first edge node. After receiving the deployment list, the first edge node may configure and run the first application based on the configuration information of the first application, and record the configuration information of the second application. The cloud management platform may send the first notification to the first edge node when detecting that the second edge node is added to the edge device group, so that the first edge node sends the configuration information of the second application to the second edge node based on the first notification, and the second edge node configures and runs the second application based on the configuration information of the second application. In the foregoing process, the first application and the second application may be used to complete a service specified by the tenant. The first edge node may configure the first application on the first edge node, and configure the second application on the second edge node based on an indication of the cloud management platform. This is equivalent to a case in which the first edge node divides the service into two parts with assistance of the cloud management platform. The first edge node is responsible for a part of the service, and the second edge node is responsible for the other part of the service. In this case, the first edge node may run the first application and the second application in cooperation with the second edge node to complete the service specified by the tenant. It can be learned that, regardless of how complex the service is, the service can be jointly completed by the first edge node and the second edge node, to meet various service requirements of the tenant.

Further, when running the second application, if the second edge node finds that the second edge node is overloaded, the second edge node may reserve a part of the second application based on an indication of the cloud management platform, and migrate the other part of the second application to the third edge node. In this way, the second edge node may run the second application in cooperation with the third edge node to process the collected data. It can be learned that, when the second edge node executes a part of the service that the second edge node is responsible for, if the second edge node finds that the second edge node cannot bear the part of the service, the second edge node may adjust the part of the service without an additional manual operation, to effectively reduce labor costs and facilitate a system implementation.

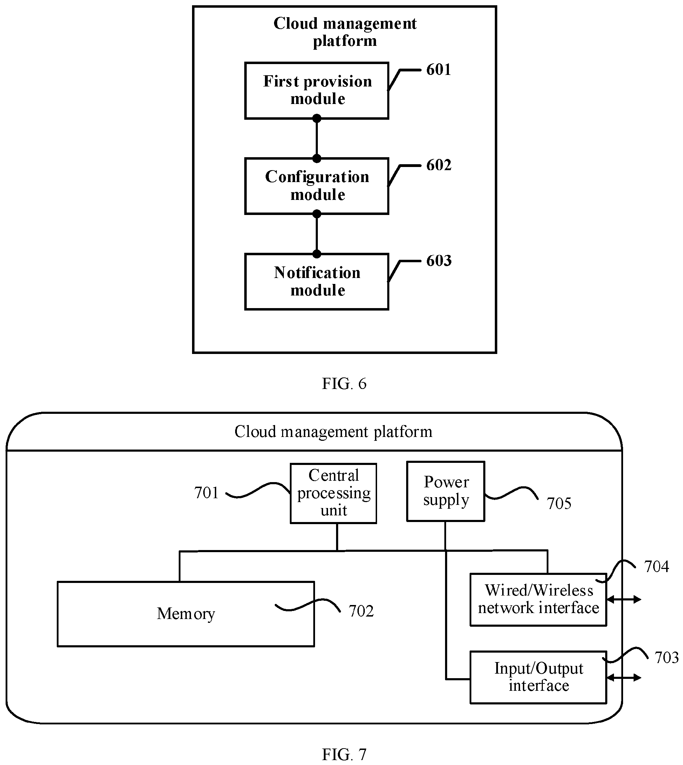

The foregoing describes in detail the edge node control method based on the cloud computing technology provided in embodiments of this application. The following describes a cloud management platform provided in embodiments of this application. It should be noted that FIG. 6 is a diagram of a structure of a cloud management platform according to an embodiment of this application. As shown in FIG. 6, the cloud management platform manages an infrastructure that provides a cloud service, the cloud management platform is connected to an on-premises first edge node and an on-premises second edge node, and the cloud management platform includes:
a first provision module 601, configured to provide a configuration interface, where the configuration interface is configured to receive configuration information of a first application and configuration information of a second application that are input by a tenant, for example, the first provision module 601 may implement step 201 in the embodiment shown in FIG. 2A and FIG. 2B;
a configuration module 602, adapted to configure a deployment list, and send the deployment list to the first edge node, where the first edge node is disposed in an edge device group, and the deployment list indicates the first edge node to configure and run the first application based on the configuration information of the first application and record the configuration information of the second application, for example, the configuration module 602 may implement step 202 and step 203 in the embodiment shown in FIG. 2A and FIG. 2B; and
a notification module 603, configured to send a first notification to the first edge node when it is detected that the second edge node is added to the edge device group, where the first notification indicates the first edge node to send the configuration information of the second application to the second edge node, and the configuration information of the second application indicates the second edge node to configure and run the second application, for example, the notification module 603 may implement step 204, step 205, and step 206 in the embodiment shown in FIG. 2A and FIG. 2B.

In this embodiment of this application, after the configuration information of the first application and the configuration information of the second application that are input by the tenant are received through the configuration interface, the cloud management platform may send the deployment list that includes the configuration information of the first application and the configuration information of the second application to the first edge node. After receiving the deployment list, the first edge node may configure and run the first application based on the configuration information of the first application, and record the configuration information of the second application. The cloud management platform may send the first notification to the first edge node when detecting that the second edge node is added to the edge device group, so that the first edge node sends the configuration information of the second application to the second edge node based on the first notification, and the second edge node configures and runs the second application based on the configuration information of the second application. In the foregoing process, the first application and the second application may be used to complete a service specified by the tenant. The first edge node may configure the first application on the first edge node, and configure the second application on the second edge node based on an indication of the cloud management platform. This is equivalent to a case in which the first edge node divides the service into two parts with assistance of the cloud management platform. The first edge node is responsible for a part of the service, and the second edge node is responsible for the other part of the service. In this case, the first edge node may run the first application and the second application in cooperation with the second edge node to complete the service specified by the tenant. It can be learned that, regardless of how complex the service is, the service can be jointly completed by the first edge node and the second edge node, to meet various service requirements of the tenant.

In a possible implementation, the cloud management platform further includes a second provision module, configured to provide a control interface, where the control interface is configured to receive a control command that is input by the tenant and that is for the first application; and a sending module, configured to send the control command to the first edge node, where the control command is executed in the first application of the first edge node. For example, the second provision module and the sending module may implement step 207 in the embodiment shown in FIG. 2A and FIG. 2B.

In a possible implementation, the first application indicates the first edge node to collect data, and the second application indicates the second edge node to process the data collected by the first edge node. For example, step 208 and step 209 in the embodiment shown in FIG. 2A and FIG. 2B may be implemented based on the first application and the second application.

In a possible implementation, the cloud management platform further includes an obtaining module, configured to obtain, from the second edge node, a data processing result generated by processing the data by the second edge node; and a third provision module, configured to provide the data processing result for the tenant. For example, the obtaining module and the third provision module may implement step 210 in the embodiment shown in FIG. 2A and FIG. 2B.

It should be noted that, content such as information exchange between the modules/units of the apparatuses and an implementation process is based on the same concept as the method embodiment of this application, and produces the same technical effects as those of the method embodiment of this application. For specific content, refer to the foregoing descriptions in the method embodiment of embodiments of this application. Details are not described herein again.

FIG. 7 is a diagram of another structure of a cloud management platform according to an embodiment of this application. As shown in FIG. 7, an embodiment of the cloud management platform may include one or more central processing units 701, a memory 702, an input/output interface 703, a wired/wireless network interface 704, and a power supply 705.

The memory 702 may perform transitory storage or persistent storage. Further, the central processing unit 701 may be configured to communicate with the memory 702, and perform, on the cloud management platform, operations of a series of instructions in the memory 702.

In this embodiment, the central processing unit 701 may perform the method steps performed by the cloud management platform in the embodiment shown in FIG. 2A and FIG. 2B. Details are not described herein again.

In this embodiment, specific functional module division in the central processing unit 701 may be similar to division manners of the first provision module, the configuration module, the notification module, the second provision module, the sending module, the obtaining module, and the third provision module described in FIG. 6. Details are not described herein again.

An embodiment of this application further relates to a computer storage medium. The computer-readable storage medium stores a program used for signal processing. When the program is run on a computer, the computer is enabled to perform the steps performed by the cloud management platform in the embodiment shown in FIG. 2A and FIG. 2B.

An embodiment of this application further relates to a computer program product. The computer program product stores instructions, and when the instructions are executed by a computer, the computer is enabled to perform the steps performed by the cloud management platform in the embodiment shown in FIG. 2A and FIG. 2B.

It may be clearly understood by a person skilled in the art that, for convenient and brief description, for detailed working processes of the foregoing systems, apparatuses, and units, refer to corresponding processes in the foregoing method embodiment. Details are not described herein again.

In the several embodiments provided in this application, it should be understood that the disclosed systems, apparatuses, and method may be implemented in another manner. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, may be located in one location, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or a part of the technical solutions may be implemented in the form of a software product. The computer software product is stored in a storage medium and includes several instructions for instructing a computer device (which may be a personal computer, a server, a network device, or the like) to perform all or a part of the steps of the methods described in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

## Claims

1. An edge node control method based on a cloud computing technology, wherein the method is applied to a cloud management platform, the cloud management platform manages an infrastructure that provides a cloud service, the cloud management platform is connected to an on-premises first edge node and an on-premises second edge node, and the method comprises:
Providing, by the cloud management platform, a configuration interface, wherein the configuration interface is configured to receive configuration information of a first application and configuration information of a second application that are input by a tenant;
Configuring, by the cloud management platform, a deployment list, and sending the deployment list to the first edge node, wherein the first edge node is disposed in an edge device group, and the deployment list indicates the first edge node to configure and run the first application based on the configuration information of the first application, and record the configuration information of the second application; and
Sending, by the cloud management platform, a first notification to the first edge node when detecting that the second edge node is added to the edge device group, wherein the first notification indicates the first edge node to send the configuration information of the second application to the second edge node, and the configuration information of the second application indicates the second edge node to configure and run the second application.

2. The method according to claim 1, wherein the method further comprises:
Providing, by the cloud management platform, a control interface, wherein the control interface is configured to receive a control command that is input by the tenant and that is for the first application; and
Sending, by the cloud management platform, the control command to the first edge node, wherein the control command is executed in the first application of the first edge node.

3. The method according to claim 1 or 2, wherein the first application indicates the first edge node to collect data, and the second application indicates the second edge node to process the data collected by the first edge node.

4. The method according to claim 3, wherein the method further comprises:
Obtaining, by the cloud management platform, from the second edge node, a data processing result generated by processing the data by the second edge node; and
Providing, by the cloud management platform, the data processing result for the tenant.

5. A cloud management platform, wherein the cloud management platform manages an infrastructure that provides a cloud service, the cloud management platform is connected to an on-premises first edge node and an on-premises second edge node, and the cloud management platform comprises:
a first provision module, configured to provide a configuration interface, wherein the configuration interface is configured to receive configuration information of a first application and configuration information of a second application that are input by a tenant;
a configuration module, adapted to configure a deployment list and send the deployment list to the first edge node, wherein the first edge node is disposed in an edge device group, and the deployment list indicates the first edge node to configure and run the first application based on the configuration information of the first application, and record the configuration information of the second application; and
a notification module, configured to send a first notification to the first edge node when it is detected that the second edge node is added to the edge device group, wherein the first notification indicates the first edge node to send the configuration information of the second application to the second edge node, and the configuration information of the second application indicates the second edge node to configure and run the second application.

6. The cloud management platform according to claim 5, wherein the cloud management platform further comprises:
a second provision module, configured to provide a control interface, wherein the control interface is configured to receive a control command that is input by the tenant and that is for the first application; and
a sending module, configured to send the control command to the first edge node, wherein the control command is executed in the first application of the first edge node.

7. The cloud management platform according to claim 5 or 6, wherein the first application indicates the first edge node to collect data, and the second application indicates the second edge node to process the data collected by the first edge node.

8. The cloud management platform according to claim 7, wherein the cloud management platform further comprises:
an obtaining module, configured to obtain, from the second edge node, a data processing result generated by processing the data by the second edge node; and
a third provision module, configured to provide the data processing result for the tenant.

9. An edge node control system, wherein the system comprises a cloud management platform, an infrastructure, a first edge node, and a second edge node, the cloud management platform manages the infrastructure that provides a cloud service, and the cloud management platform is connected to the on-premises first edge node and the on-premises second edge node;
the cloud management platform is configured to provide a configuration interface, wherein the configuration interface is configured to receive configuration information of a first application and configuration information of a second application that are input by a tenant;
the cloud management platform is further adapted to configure a deployment list, and send the deployment list to the first edge node, wherein the first edge node is disposed in an edge device group;
the first edge node is adapted to configure and run the first application based on the configuration information of the first application comprised in the deployment list, and record the configuration information of the second application comprised in the deployment list;
the cloud management platform is further configured to send a first notification to the first edge node when detecting that the second edge node is added to the edge device group;
the first edge node is further configured to send the configuration information of the second application to the second edge node based on the first notification; and
the second edge node is adapted to configure and run the second application based on the configuration information of the second application.

10. The system according to claim 9, wherein the cloud management platform is further configured to:
provide a control interface, wherein the control interface is configured to receive a control command that is input by the tenant and that is for the first application; and
send the control command to the first edge node, wherein the control command is executed in the first application of the first edge node.

11. The system according to claim 9 or 10, wherein the first application indicates the first edge node to collect data, and the second application indicates the second edge node to process the data collected by the first edge node.

12. The system according to claim 11, wherein the cloud management platform is further configured to:
Obtain, from the second edge node, a data processing result generated by processing the data by the second edge node; and
Provide the data processing result for the tenant.

13. A cloud management platform, wherein the cloud management platform comprises a memory and a processor;
and
the memory stores code, the processor is configured to execute the code, and when the code is executed, the cloud management platform performs the method according to any one of claims 1 to 4.

14. A computer storage medium, wherein the computer storage medium stores a computer program, and when the program is executed by a computer, the computer is enabled to implement the method according to any one of claims 1 to 4.

15. A computer program product, wherein the computer program product stores instructions, and when the instructions are executed by a computer, the computer is enabled to implement the method according to any one of claims 1 to 4.
